# EUROPEAN PATENT APPLICATION

(11) **EP 2 759 898 A1**
(43) Date of publication of application: **30.07.2014**
(21) Application number: 14152402.5
(22) Date of filing: 24.01.2014
(51) Int. Cl.: G05D 23/24

(54) **Temperature control device, test apparatus and control method thereof**

(30) Priority: 24.01.2013 KR 20130007931
(71) Applicant: Samsung Electronics Co., Ltd, Gyeonggi-do 443-742 (KR)
(72) Inventor: Oh, Joo Young, Gyeonggi-do (KR)
(74) Representative: Grünecker, Kinkeldey, Stockmair & Schwanhäusser

(57) **Abstract**

A temperature control device which may control temperature of a reactor, and a test apparatus including the same are provided. The temperature control device includes at least one body, temperature controllers provided on the at least one body and configured to control a temperature or the at least one body, and at least one temperature sensor provided on the at least one body and configured to measure the temperature of the at least one body.

## Description

### CROSS-REFERENCE TO RELATED APPLICATION

### BACKGROUND

### 1. Field

Apparatuses and methods consistent with exemplary embodiments relate to a test apparatus which measures a specimen contained in a biochemical sample.

### 2. Description of the Related Art

Testing in various fields, including environmental monitoring, food inspection, medical diagnosis, etc., is performed by reacting fluid samples with various reagents. In biochemical reactions of fluid samples, temperature conditions can greatly influence reaction results, and thus, it is necessary to maintain temperature conditions necessary to perform a reaction.

Therefore, development of an apparatus which may rapidly and precisely deduce results while maintaining optimal reaction temperature of a fluid sample has been required.

### SUMMARY

Exemplary embodiments provide a temperature control device which may control temperature of a reactor, and a test apparatus including the same.

In accordance with an aspect of an exemplary embodiment, there is provided a temperature control device including at least one body, a plurality of temperature controllers provided on the at least one body and configured to control the temperature of the at least one body, and at least one temperature sensor provided on the at least one body and configured to measure the temperature of the at least one body.

A first surface of the at least one body may be in thermal contact with a reactor, and the temperature controllers may be provided on a second surface of the at least one body.

The at least one body may include a metal printed circuit board (PCB).

Each of the temperature controllers may include at least one of a heating element and a cooling element.

The heating element may include a resistive heater and the cooling element may include a thermoelectric element.

The at least one body may include at least one hole provided at a position corresponding to an object to be detected present in the reactor so that light may be irradiated onto the object to be detected.

The at least one temperature sensor may be provided at a position adjacent to the at least one hole.

The at least one temperature sensor may include at least one of an NTC thermistor and a PTC thermistor.

The temperature control device may further include a connector configured to electrically connect at least one of the temperature controllers and the at least one temperature sensor to a controller of a test apparatus.

In accordance with an aspect of another exemplary embodiment, there is provided a test apparatus including a temperature control device and a controller configured to control operation of temperature controllers of the temperature control device so that the temperature of the temperature control device does not exceed a predetermined temperature based on a detection result of at least one temperature sensor of the temperature control device.

The controller may be configured to output a signal to operate the temperature controllers so that the temperature control device reaches a predetermined set temperature, and a connector of the temperature control device may be configured to receive the output signal of the controller and provide the output signal to the temperature controllers.

The connector of the temperature control device may be configured to detect current output by the temperature controllers and transmit a detected current signal to the controller, and the controller may be configured to determine whether or not the temperature controllers are operated according to the operation signal based on the detected current signal received from the connector.

In accordance with an aspect of another exemplary embodiment, there is provided a control method of a test apparatus, the control method including operating the temperature controllers of a temperature control device so that the temperature control device may maintain a predetermined set temperature and controlling operation of the temperature controllers so that the temperature of the temperature control device detected by at least one temperature sensor of the temperature control device does not exceed a predetermined temperature.

The operating of the temperature controllers may include outputting a signal to operate the temperature controllers so that the temperature control device reaches a predetermined set temperature and receiving the output signal through a connector of the temperature control device and operating the temperature controllers.

The control method may further include determining whether or not the temperature controllers are operated according to the operation signal based on a signal transmitted through the connector.

The temperature control device may include at least one body, the temperature controllers provided on the at least one body and configured to control the temperature of the at least one body, the at least one temperature sensor provided on the at least one body and configured measure the temperature of the at least one body, and a connector configured to electrically connect at least one of the temperature controllers and the at least one temperature sensor to a controller of the test apparatus.

The at least one body may include a metal PCB, one surface of the at least one body may thermally contact a reactor, and the temperature controllers may be provided on the other surface of the at least one body.

Each of the temperature controllers may include at least one of a heating element and a cooling element, the heating element may include a resistive heater, and the cooling element may include a thermoelectric element.

The at least one body may include at least one hole provided at a position corresponding to an object to be detected present in the reactor so that light may be irradiated onto the object to be detected, and the at least one temperature sensor may be provided at a position adjacent to the at least one hole.

The at least one temperature sensor may include at least one of an NTC thermistor and a PTC thermistor.

### BRIEF DESCRIPTION OF THE DRAWINGS

The above and/or other aspects will become apparent and more readily appreciated from the following description of the exemplary embodiments, taken in conjunction with the accompanying drawings of which:
FIG. 1 is a block diagram illustrating the configuration of a test apparatus in accordance with an exemplary embodiment;
FIG. 2 is a perspective view illustrating a reactor in accordance with the exemplary embodiment;
FIG. 3 is a block diagram illustrating the configuration of a temperature control device in accordance with the exemplary embodiment;
FIG. 4 is a view illustrating the schematic structure of the temperature control device in accordance with the exemplary embodiment;
FIG. 5 is a perspective view schematically illustrating combination of the temperature control device and the reactor in accordance with the exemplary embodiment;

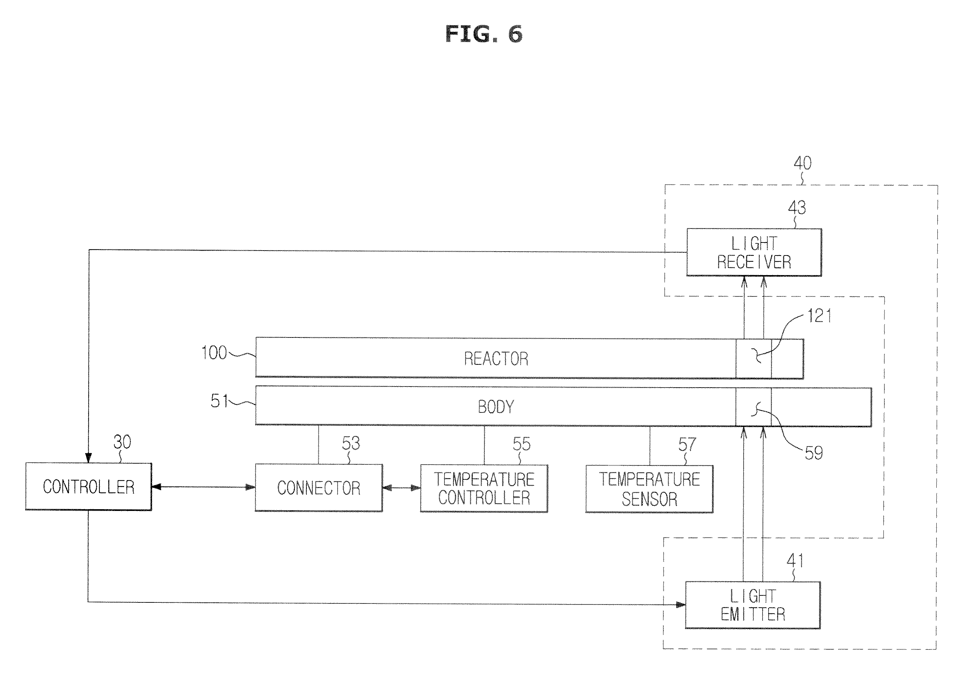

FIG. 6 is a block diagram illustrating the temperature control device and the reactor in accordance with the exemplary embodiment;
FIG. 7 is a view illustrating one example of the combination of the temperature control device with the reactor in accordance with the exemplary embodiment;
FIG. 8 is a view illustrating another example of the combination of the temperature control device with the reactor in accordance with the exemplary embodiment;
FIG. 9 is a view illustrating an example of the combination of a temperature control device with a reactor in accordance with another exemplary embodiment;
FIG. 10 is a view illustrating another example of the combination of the temperature control device with the reactor in accordance with the exemplary embodiment;
FIG. 11 is a view illustrating an example of the combination of a temperature control device with a reactor in accordance with yet another exemplary embodiment;
FIG. 12 is a view illustrating another example of the combination of the temperature control device with the reactor in accordance with the exemplary embodiment; and
FIG. 13 is a flowchart illustrating a control method of a test apparatus in accordance with an exemplary embodiment.

### DETAILED DESCRIPTION

Reference will now be made in detail to exemplary embodiments, examples of which are illustrated in the accompanying drawings, wherein like reference numerals refer to like elements throughout.

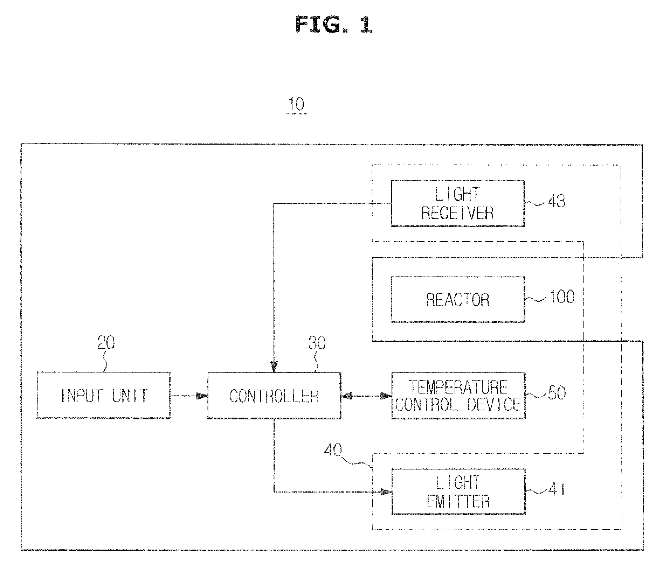

FIG. 1 is a block diagram illustrating the configuration of a test apparatus in accordance with an exemplary embodiment.

With reference to FIG. 1, the test apparatus 10 includes an input unit 20 through which user instructions are input from the outside, a controller 30 configured to control the overall operation and function of the test apparatus 10 according to the instructions input through the input unit 20 and control the operation of a temperature control device 50 so that reaction in a reactor 100 occurs at a predetermined set temperature. The test apparatus 10 further includes a photodetector module 40 including a light emitter 41 configured to irradiate light onto the reactor 100 and a light receiver 43 configured to detect light irradiated from the light emitter 41 and then transmitted or reflected by a sample. The test apparatus 10 further includes a temperature control device 50 configured to control temperature so that a reaction in the reactor 100 occurs at a predetermined temperature.

The reactor 100 is configured to accommodate a biochemical sample, such as blood, so that a biochemical reaction can be performed therein to determine whether or not a specimen is contained in the sample and/or to calculate the concentration of the specimen. In various embodiments, the biochemical reaction may include a reagent reacting with the specimen to detect the specimen.

The reactor 100 may include a microfluidic device or a fluid analysis cartridge that relies upon centrifugal force or capillary force as drive pressure for moving a fluid. Hereinafter, as one example of the reactor 100, a fluid analysis cartridge will be described.

The light emitter 41 of the photodetector module 40 may be a surface light source having a wide light emission area and configured to irradiate uniform light onto a designated area of the fluid analysis cartridge 100. For example, a backlight unit may serve as the light emitter 41.

Further, the light emitter 41 may be a light source configured to turn on/off at a designated frequency, i.e., a semiconductor light emitting device, such as a light emitting diode (LED) or a laser diode (LD), or a gas discharge lamp, such as a halogen lamp or a xenon lamp.

The light receiver 43 of the photodetector module 40 may configured to detect light irradiated from the light emitter 41 and/or transmitted or reflected by a sample of the fluid analysis cartridge 100, and to generate an electrical signal according to the intensity of light. The light receiver 43 may include a depletion layer photo diode, an avalanche photo diode, or a photomultiplier tube. Otherwise, the light receiver 43 may be a CMOS image sensor or a CCD image sensor.

The light emitter 41 and the light receiver 43 may be provided opposite each other with the reactor 100 disposed there between, or both the light emitter 41 and the light receiver 43 may be provided above or below the reactor 100. In this exemplary embodiment, the light emitter 41 and the light receiver 43 are provided opposite each other with the reactor 100 disposed there between.

The intensity or wavelength of light irradiated from the light emitter 41 may be controlled according to instructions from the controller 30. The light receiver 43 may transmit an electrical signal to the controller 30 that corresponds to detected light.

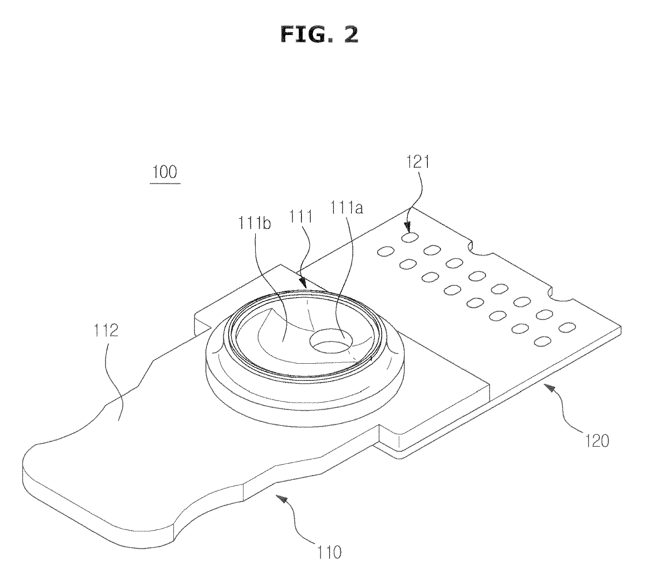

FIG. 2 is a perspective view illustrating the fluid analysis cartridge 100 used as the reactor in accordance with the exemplary embodiment.

The fluid analysis cartridge 100 includes a housing 110 supporting the fluid analysis cartridge 100, and a test unit 120 within which a reaction between the fluid and the reagent occurs.

A hand grip part 112 which may be gripped by a user and a fluid accommodation unit 111 configured to accommodate a fluid are disposed on the housing 110. The fluid accommodation unit 111 includes a hole 111a into which the fluid flows and a supply assistance part 111b inclined so that the fluid easily flows into the hole 111a. A filter configured to remove, for example, blood corpuscles may be provided in the hole 111a in embodiments where the fluid is blood. A plurality of chambers 121 may be provided on the test unit 120 and configured to receive the fluid from the fluid accommodation unit 111.

The chambers 121 provided on the test unit 120 may include reaction chambers in which reagents to detect various kinds of specimens are accommodated, and a control chamber in which no reagent to detect the specimens is accommodated.

When a fluid sample, such as blood serum, moves to the reaction chambers containing a reagent configured to detect a specimen, the photodetector module 40 irradiates light onto the reaction chambers under the control of the controller 30. The photodetector module 40 then detects light transmitted by the reaction chambers, and transmits a signal corresponding to the detected light to the controller 30. The controller 30 determines whether or not the specimen is present in the blood serum and/or the concentration of the specimen by calculating absorbance based on the received detection signal.

In general, in order to properly perform a biochemical reaction, temperature conditions of the space in which the reaction is performed are important. When proper temperature conditions are not satisfied, a reactive material may become denatured or the reaction may not be properly performed, and thus, a desired material may not be detected. Therefore, optimal temperature conditions for performing the reaction should be maintained until the reaction is completed.

The temperature control device 50 in accordance with the exemplary embodiment is configured to control the reaction temperature of the fluid analysis cartridge 100 so that a reaction may be performed in the fluid analysis cartridge 100 under optimal temperature conditions.

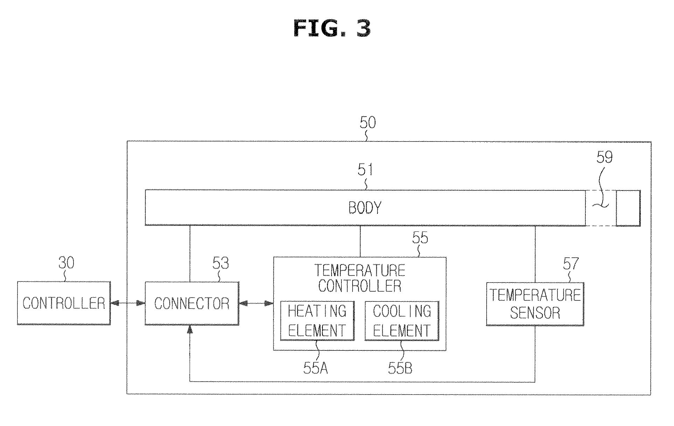

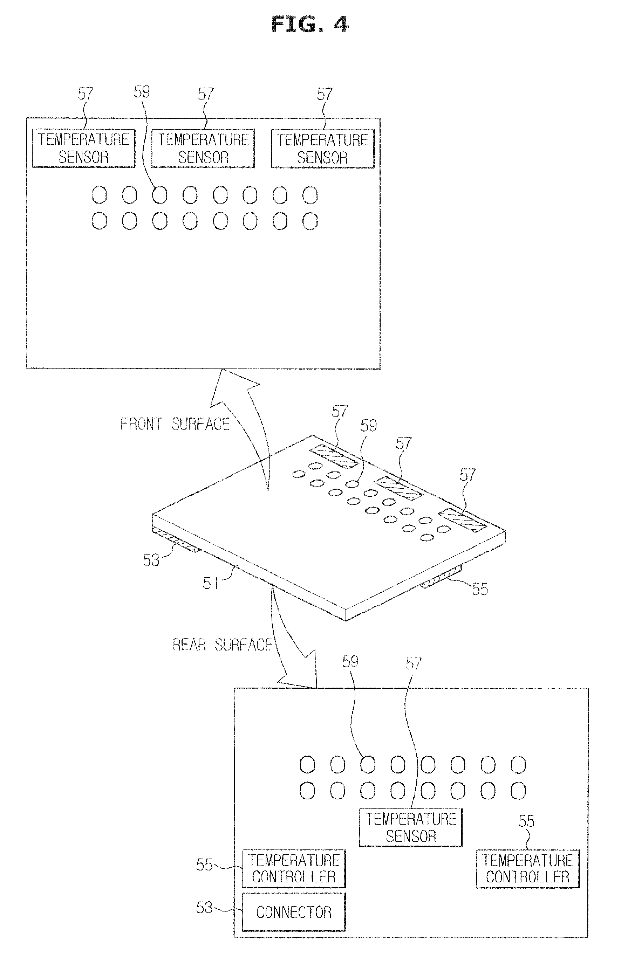

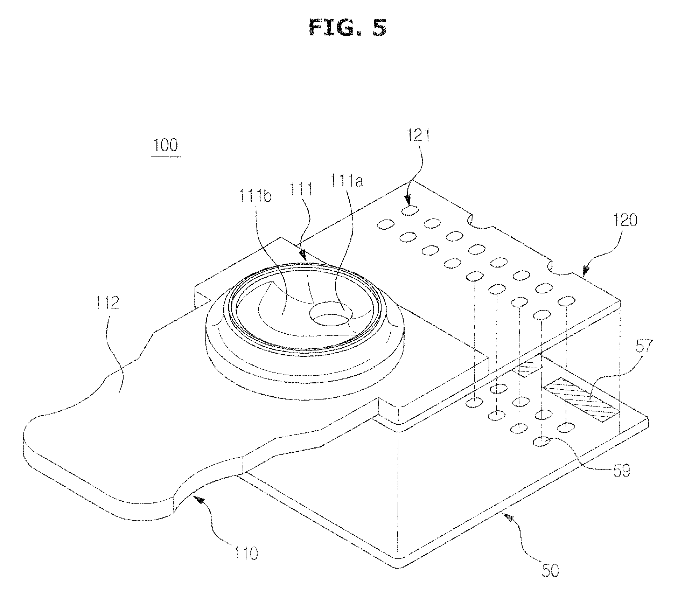

FIG. 3 is a block diagram illustrating the configuration of the temperature control device 50 in accordance with the exemplary embodiment, FIG. 4 is a view illustrating the schematic structure of the temperature control device 50 in accordance with the exemplary embodiment, and FIG. 5 is a perspective view schematically illustrating the temperature control device 50 and the reactor 100 in accordance with the exemplary embodiment.

The temperature control device 50 includes temperature controllers 55 configured to control the temperature of the temperature control device 50, temperature sensors 57 configured to sense the temperature of the temperature control device 50, a connector 53 configured to connect the temperature controllers 55 and the temperature sensors 57 to the controller 30 of the test apparatus 10, and a body 51 on which the temperature controllers 55, the temperature sensors 57 and the connector 53 are mounted.

The body 51 may employ a metal printed circuit board (PCB).

The metal PCB generally has a structure in which an insulation adhesive layer and a circuit pattern layer are stacked on a metal heat dissipation layer. The circuit pattern layer is formed of a Cu foil, the insulation adhesive layer is formed of thermally conductive prepreg having excellent thermal conductivity, and the metal heat dissipation layer is a base substrate formed of a metal having excellent thermal conductivity, such as aluminum, copper or an alloy of aluminum and copper. Aluminum or copper is only one example of the metal used as the metal heat dissipation layer, and the base substrate may be formed of other metals. Because the metal PCB includes the metal heat dissipation layer and includes the insulation adhesive layer having excellent thermal conductivity, as described above, it exhibits high thermal conductivity and excellent heat dissipation.

Further, as exemplarily shown in FIGS. 3 and 4, a plurality of holes 59 is formed through the body 51. The holes 59 may be formed at positions corresponding to the chambers 121 formed on the test unit of the fluid analysis cartridge 100, as exemplarily shown in FIG. 5. The number of holes 59 formed through the body 51 may be equal to or greater than the number of the chambers 121 of the fluid analysis cartridge 100, and the size of the holes 59 may be equal to or greater than the size of the chambers 121 of the fluid analysis cartridge 100.

As described above, in order to measure the concentration of a specimen detected as a result of the reaction occurring in the chambers 121, the light emitter 41 of the photodetector module 40 irradiates light onto the chambers 121. Thus, the holes 59 are provided at positions of the temperature control device 50 corresponding to the chambers 121 so as to not disturb progression of light irradiated onto the chambers 121. In various embodiments, the holes 59 may be omitted and portions of the temperature control device 50 corresponding to the chambers 121 may be formed of a transparent member, as long as these portions do not disturb progression of light.

As exemplarily shown in FIG. 5, the test unit 120 of the fluid analysis cartridge 100 and the temperature control device 50 thermally contact each other, with the chambers 121 of the fluid analysis cartridge 100 and the holes 59 of the body 51 being disposed opposite each other.

When the fluid analysis cartridge 100 is loaded on the test apparatus 10 to detect the specimen, the light emitter 41 irradiates light to measure absorbance of the chambers 121. The irradiated light passes through the holes 59 of the temperature control device 50 and is incident upon the chambers 121 of the reactor 100.

Each of the temperature controllers 55 may include a heating element 55A, which may be a general resistive heater configured to heat the body 51 of the temperature control device 50. Thus, when current is applied to the heating unit, the resistive heater generates heat, which is transmitted to the body 51 of the temperature control device 50 so that the temperature of the body 51 increases to a desired set temperature.

Further, each of the temperature controllers 55 may include a cooling element 55B, which may be a thermoelectric element configured to cool the body 51 of the temperature control device 50. If the temperature of the temperature control device 50 exceeds the desired set temperature, DC current may be applied to the thermoelectric element, thereby causing the thermoelectric element to absorb heat from the body 51 and dissipate the heat to the outside. In order to achieve a more effective heat dissipation, a heat sink plate may be provided on a surface of the thermoelectric element. Thus, although operation of the resistive heater may be stopped so as to naturally cool the body 51 of the temperature control device 50, the thermoelectric element may be used to actively cool the body 51 of the temperature control device 50 so as to more rapidly control the temperature of the temperature control device 50. Further, the temperature control device 50 may be provided with a temperature safety device configured to interrupt the supply of current if the temperature of the body 51 exceeds a predetermined temperature and/or if the current supplied to the temperature controllers 55 exceeds a predetermined value, i.e., in case of emergency, such as malfunction of the temperature controllers 55. For example, a fuse, which is configured to automatically short-circuit due to heat generated by an overcurrent situation, may be used as the temperature safety device. In general, a fuse is formed of an alloy of lead and tin, or zinc and tin, having low melting points. Further, a micro-current fuse in which a thin wire having a high melting point is formed of tungsten through precision machining may be used as the temperature safety device. Such a micro-current fuse may be used at a low current, such as 5A or less. Alternatively, a current-limiting fuse which exhibits high arc resistance and limits the rise of overcurrent due to a voltage drop may be used as the temperature safety device.

The temperature sensors 57 are configured to measure the temperature of the body 51. In various embodiments, the temperature sensors 57 may be thermistors.

The temperature sensors 57 may include negative temperature coefficient (NTC) thermistors. The controller 30 of the test apparatus 10 may be configured to detect the temperature of the temperature control device 50 by reading the change in resistance of the NTC thermistors corresponding to a change in temperature.

Further, the temperature sensors 57 may include positive temperature coeffient (PTC) thermistors. The PTC thermistor is a semiconductor element that exhibits a rapid increase in resistance at a specific temperature or more. The temperature controllers 55 may therefore be designed such that the temperature controllers 55 do not heat the body 51 of the temperature control device 50 when a rapid increase in resistance is detected using the PTC thermistors.

The connector 53 may be configured to pass a signal there through. For example, a signal transmitted from the controller 30 of the test apparatus 10 may pass through the connector 53 to the temperature controllers 55. Additionally, a signal outputted by the temperature controllers 55 or the temperature sensors 57 may pass through the connector 53 to the controller 30 of the test apparatus 10.

FIG. 4 schematically illustrates the structure of the temperature control device 50.

As exemplarily shown in FIG. 4, the holes 59 corresponding to the chambers 121 of the fluid analysis cartridge 100 are formed on the temperature control device 50, and the temperature sensors 57 are provided around or in near proximity to the holes 59 so as to measure the temperature of the chambers 121 of the fluid analysis cartridge 100. The position and number of the temperature sensors 57 are not limited, but, in order to precisely measure the temperature of the chambers 121 of the fluid analysis cartridge 100, at least one temperature sensor 57 may be installed near the holes 59 of the temperature control device 50.

No element other than temperature sensors 57 may be installed on the front surface of the temperature control device 50 so that the test unit 120 of the fluid analysis cartridge 100 may be mounted on the front surface of the temperature control device 50.

The temperature controllers 55, the temperature sensors 57, and the connector 53 may be installed on the rear surface of the temperature control device 50. The respective elements installed on the rear surface of the temperature control device 50 are not limited to the positions and number of the elements, as exemplarily shown in FIG. 4.

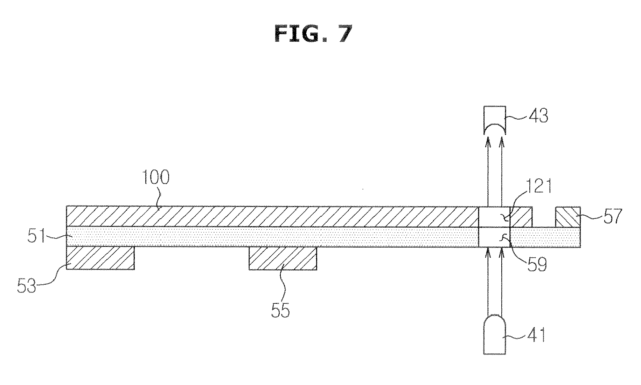

FIGS. 7 to 12 illustrate various combinations of the structural relationship between the temperature control device 50 and the fluid analysis cartridge 100.

FIG. 7 illustrates an exemplary structure between the temperature control device 50 and the fluid analysis cartridge 100. The combination structure shown in FIG. 7 schematically illustrates the longitudinal-sectional view wherein the fluid analysis cartridge 100 and the temperature control device 50 shown in FIG. 5 thermally contact each other. Although FIG. 7 illustrates the fluid analysis cartridge 100 and the temperature control device 50 as contacting each other, transmission of heat generated by the temperature control device 50 to the fluid analysis cartridge 100 may be carried out by convection as well as thermal conduction through direct contact. Thus, the temperature control device 50 and the fluid analysis cartridge 110 may be combined such that a space is present between the temperature control device 50 and the fluid analysis cartridge 110 so long as heat transmission efficiency is not significantly limited.

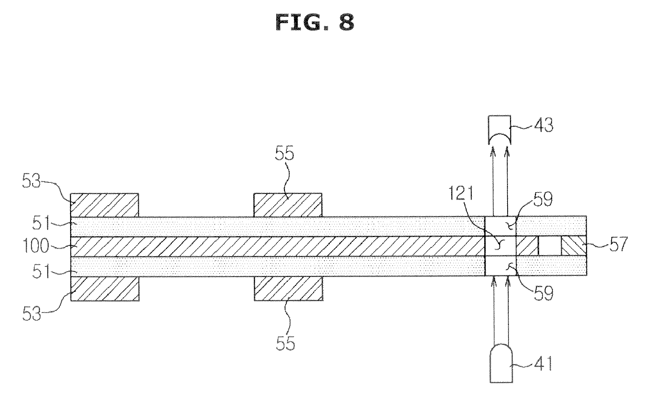

In various embodiments, the temperature control device 50 may be combined with the front surface as well as the rear surface of the fluid analysis cartridge 100, as exemplarily shown in FIG. 8. In such a configuration, the temperature control devices 50 combined with the front and rear surfaces of the fluid analysis cartridge 100 may more rapidly control temperature.

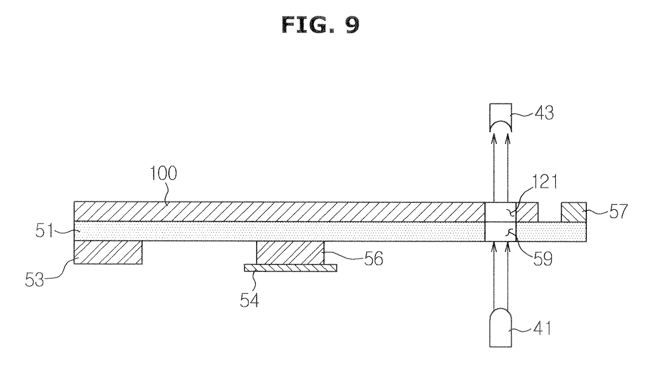

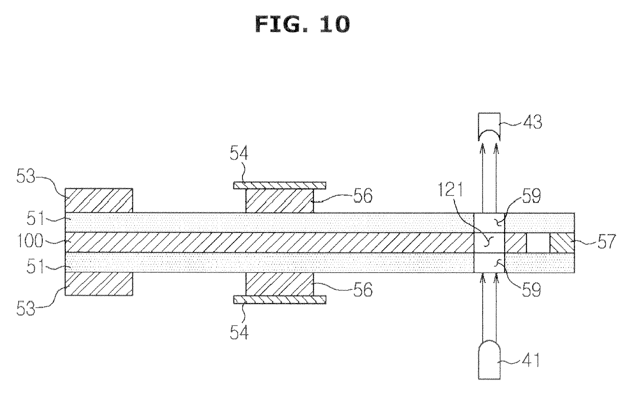

FIGS. 9 and 10 illustrate combination structures between a temperature control device 50 and a fluid analysis cartridge 100 in accordance with another exemplary embodiment.

Each of the temperature controllers 55 of the temperature control device 50 shown in FIG. 9 includes a thermoelectric element 56 and a heat sink plate 54 assisting the thermoelectric element 56 in dissipating absorbed heat.

That is, each of the temperature controllers 55 includes both a resistive heater heating the body 51 and the thermoelectric element 56 absorbing heat from the body 51 and discharging the heat to the outside to control the temperature of the fluid analysis cartridge 100, if the temperature of the temperature control device 50 exceeds a desired set temperature. Further, in order to achieve more effective heat dissipation, a heat sink plate 54 may be provided on a surface of the thermoelectric element 54. Thus, although operation of the resistive heater may be stopped so as to naturally cool the body 51 of the temperature control device 50, the thermoelectric element 56 may be used to actively cool the body 51 of the temperature control device 50 so as to more rapidly control the temperature of the temperature control device 50.

The temperature control device 50 may be combined with the front surface as well as the rear surface of the fluid analysis cartridge 100, as exemplarily shown in FIG. 10. In such a configuration, the temperature control devices 50 combined with the front and rear surfaces of the fluid analysis cartridge 100 may more rapidly control temperature.

Although FIG. 8 or 10 illustrates the temperature control devices 50 in accordance with the same exemplary embodiment as being combined with the front and rear surfaces of the fluid analysis cartridge 100, the temperature control devices 50 in accordance with different exemplary embodiments may be combined with the front and rear surfaces of the fluid analysis cartridge 100.

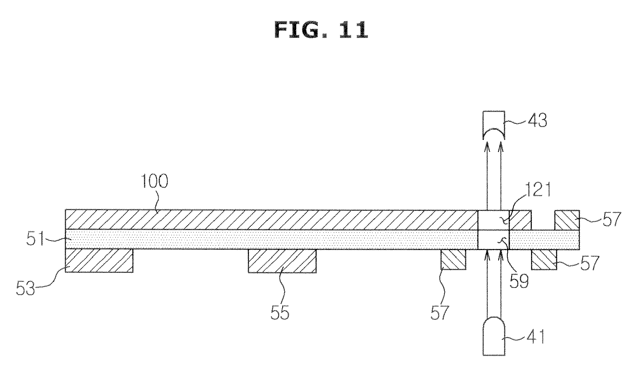

A temperature control device 50 shown in FIG. 11 includes a plurality of temperature sensors 57 so as to more precisely measure the temperature of the chambers 121 of the fluid analysis cartridge 100. In order to more precisely measure the temperature of the chambers 121 of the fluid analysis cartridge 100, the plurality of temperature sensors 57 may be provided around and/or in near proximity to the holes 59 of the body 51. If the plurality of temperature sensors 57 is installed, as exemplarily shown in FIG 11, the controller 30 may be configured to receive information regarding the temperatures sensed by the plurality of temperature sensors 57, and to calculate the temperature of the chambers 121 by calculating the mean of the received information. In order to more precisely calculate the temperature, various algorithms may be employed.

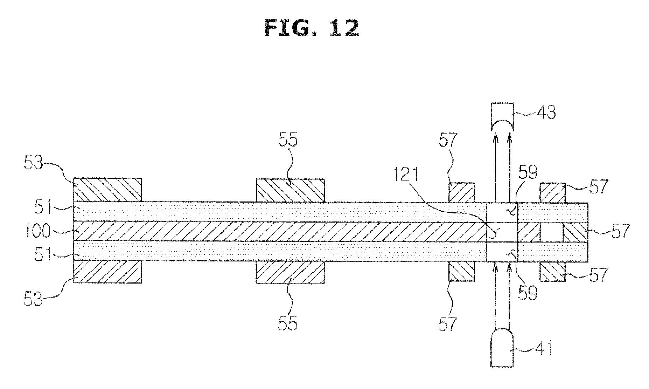

The temperature control device 50 may be combined with the front surface as well as the rear surface of the fluid analysis cartridge 100, as exemplarily shown in FIG 12. The temperature control devices 50 combined with the front and rear surfaces of the fluid analysis cartridge 100 may more rapidly control temperature.

Although FIG. 8, 10, or 12 illustrates the temperature control devices 50 in accordance with the same exemplary embodiment as being combined with the front and rear surfaces of the fluid analysis cartridge 100, the temperature control devices 50 in accordance with different exemplary embodiments may be combined with the front and rear surfaces of the fluid analysis cartridge 100.

The controller 30 of the test apparatus 10 may be configured to control operation of the temperature control device 50 so that a reaction in the chambers 121 of the fluid analysis cartridge 100 occurs at optimal temperature.

If information regarding the reaction temperature is input through the input unit 20, the controller 30 may be configured to control the temperature control device 50 so as to maintain temperature appropriate conditions based on the inputted information.

Otherwise, the controller 30 may be configured to control the temperature control device 50 so as to maintain a predetermined temperature set according to specimen or reaction kind.

When the controller 30 transmits a control signal to operate the temperature controllers 55 through the connector 53 of the temperature control device 50, the control signal passes through the connector 53 to the temperature controllers 55 to operate the temperature controllers 55 according to the control signal.

If the temperature of a space in which the fluid analysis cartridge 100 is loaded is below the desired set temperature, the controller 30 may output a control signal to operate the heating elements 55A, i.e., the resistive heaters, of the temperature controllers 55. If the temperature of the space in which the fluid analysis cartridge 100 is loaded exceeds the desired set temperature, the controller 30 may output a control signal to stop operation of the heating element 55A and/or to operate the cooling elements 55B, i.e., the thermoelectric elements 56, of the temperature controllers 55. The test apparatus 10 may further include separate temperature sensors 57 to measure the temperature of the space in which the fluid analysis cartridge 100 is loaded.

The temperature controllers 55 are operated according to the control signal outputted by the controller 30 and thus, the temperature of the body 51 may be changed. Thus, when the temperature of the chambers 121 of the fluid analysis cartridge 100 changes, the temperature sensors 57 of the temperature control device 50 sense such temperature changes.

Since the temperature sensors 57 are thermistors, a change in the resistance of the thermistors corresponding to changes in temperature is output to the controller 30 through the connector 53. The controller 30 is therefore configured to calculate the temperature of the chambers 121 of the cartridge 100 through the resistance outputted by the temperature sensors 57, and to determine whether or not the calculated temperature reaches the desired set temperature.

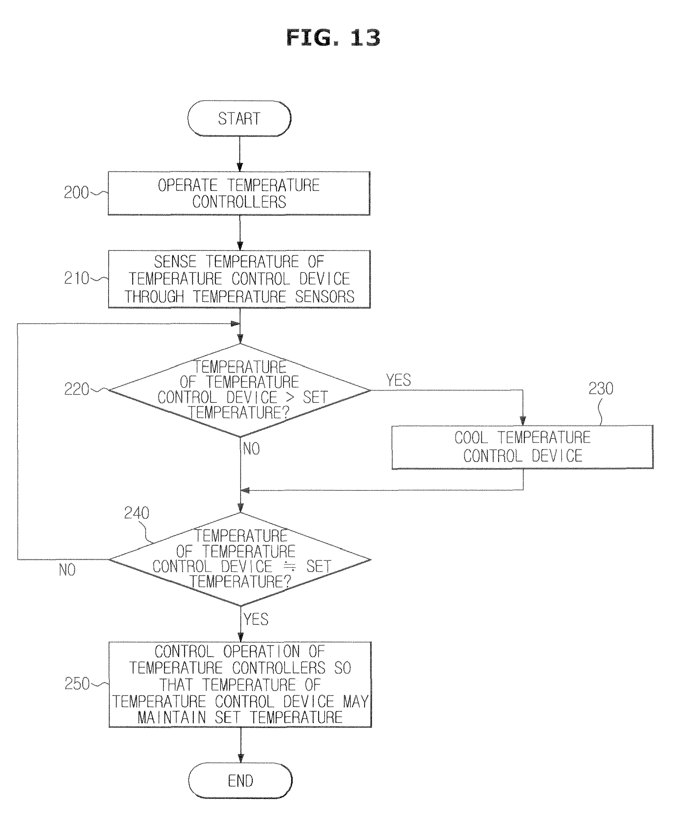

FIG. 13 is a flowchart illustrating a control method of a test apparatus 10 in accordance with an exemplary embodiment.

With reference to FIG. 13, the controller 30 operates the temperature controllers 55 of the temperature control device 50 (Operation 200). Then, when the temperature sensors 57 sense the temperature of the temperature control device 50 (Operation 210), the controller 30 determines whether or not the temperature of the temperature control device 50 sensed by the temperature sensors 57 exceeds a predetermined set temperature (Operation 220).

As discussed above, each of the temperature controllers 55 includes a heating element, such as a general resistive heater, which is configured to heat the body 51 of the temperature control device 50. When current is applied to the heating element 55A, the resistive heater is generates heat, which is transmitted to the body 51 of the temperature control device 50 to increase the temperature thereof. When the temperature of the body 51 increases, the temperature of the chambers 121 of the fluid analysis cartridge 100 thermally contacting the temperature control device 50 also increases.

As also discussed above, each of the temperature controllers 55 may include a cooling element 55B, such as a thermoelectric element 56 to cool the body 51 of the temperature control device 50. If the temperature of the temperature control device 50 exceeds the desired set temperature, DC current may be applied to the thermoelectric element 56, which then absorbs heat from the body 51 and dissipates the heat to the outside, thereby controlling the temperature of the fluid analysis cartridge 100. In order to achieve more effective heat dissipation, a heat sink plate 54 may be provided on a surface of the thermoelectric element dissipating heat.

When the temperature controllers 55 are operated according to a control signal outputted by the controller 30, the temperature sensors 57 sense the change in temperature of the temperature control device 50 and transmit the sensed change in temperature to the controller 30 through the connector 53.

The controller 30 is therefore configured to compare the temperature of the temperature control device 50 sensed by the temperature sensors 57 to the predetermined set temperature. If information regarding reaction temperature is input through the input unit 20, the set temperature may be determined based on the inputted information. Otherwise, the set temperature may be selected from among a plurality of predetermined set temperatures according to specimen or reaction kind.

The controller 30 may then stop supplying current to the resistive heater and/or supply current to the thermoelectric element to cool the temperature control device 50, if the temperature of the temperature control device 50 exceeds the set temperature (Operation 230).

The controller 30 determines whether or not the temperature control device 50 reaches the set temperature, when the temperature of the temperature control device 50 does not exceed the set temperature (Operation 240).

That is, the controller 30 determines whether or not the temperature of the temperature control device 50 is within the error range which may guarantee reliability of a reaction result based on the set temperature.

Upon determining that the temperature of the temperature control device 50 has reached the set temperature, the controller 30 controls operation of the temperature controllers 55 to maintain the set temperature until the reaction is completed (Operation 250).

As is apparent from the above description, a temperature control device in accordance with an exemplary embodiment may effectively control the reaction temperature so that a biochemical reaction in a reactor may occur at an appropriate temperature.

Although a few exemplary embodiments have been shown and described, it would be appreciated by those skilled in the art that changes may be made in these exemplary embodiments without departing from the principles and spirit of the invention, the scope of which is defined in the claims and their equivalents.

## Claims

1. A temperature control device comprising:
at least one body;
a plurality of temperature control units provided on the at least one body and controlling a temperature of the at least one body; and
at least one temperature sensor provided on the at least one body and measuring the temperature of the at least one body.

2. The temperature control device according to claim 1, wherein:
a first surface of the at least one body thermally contacts a reactor; and
the temperature control units are provided on a second surface of the at least one body.

3. The temperature control device according to claim 2, wherein the at least one body includes a metal printed circuit board (PCB).

4. The temperature control device according to claim 1, wherein each of the temperature control units includes at least one of a heating unit and a cooling unit.

5. The temperature control device according to claim 4, wherein the heating unit includes a resistive heater and the cooling unit includes a thermoelectric element.

6. The temperature control device according to claim 1, wherein the at least one body includes at least one hole provided at a position corresponding to an object to be detected present in the reactor so that light may be irradiated onto the object to be detected.

7. The temperature control device according to claim 6, wherein the at least one temperature sensor is provided at a position adjacent to the at least one hole.

8. The temperature control device according to claim 1, wherein the at least one temperature sensor includes at least one of an NTC thermistor and a PTC thermistor.

9. The temperature control device according to claim 1, further comprising a connector electrically connecting at least one of the temperature control units and the at least one temperature sensor to a controller of a test apparatus including the temperature control device.

10. A control method of a test apparatus comprising:
operating temperature control units of a temperature control device so that the temperature control device may maintain a predetermined set temperature; and
controlling operation of the temperature control units so that a temperature of the temperature control device detected by at least one temperature sensor of the temperature control device does not exceed a predetermined temperature.

11. The control method according to claim 10, wherein the operation of the temperature control units includes:
outputting a signal to operate the temperature control units so that the temperature control device reaches a predetermined set temperature; and
receiving the output signal through a connector of the temperature control device and operating the temperature control units.

12. The control method according to claim 11, further comprising judging whether or not the temperature control units are operated according to the operation signal based on a signal transmitted from the connector, when the connector of the temperature control device detects current outputted by the temperature control units.

13. The control method according to claim 10, wherein the temperature control device includes:
at least one body;
the temperature control units provided on the at least one body and controlling the temperature of the at least one body;
the at least one temperature sensor provided on the at least one body and measuring the temperature of the at least one body; and
a connector electrically connecting at least one of the temperature control units and the at least one temperature sensor to a controller of the test apparatus.

14. The control method according to claim 13, wherein:
the at least one body includes a metal PCB, one surface of the at least one body thermally contacts a reactor;
the temperature control units are provided on the other surface of the at least one body;
each of the temperature control units includes at least one of a heating unit and a cooling unit;
the heating unit includes a resistive heater; and
the cooling unit includes a thermoelectric element.

15. The control method according to claim 13, wherein the at least one body includes at least one hole provided at a position corresponding to an object to be detected present in the reactor so that light may be irradiated onto the object to be detected, and the at least one temperature sensor is provided at a position adjacent to the at least one hole.
